(19) Europäisches Patentamt
European Patent Office
Office européen des brevets

(11) Veröffentlichungsnummer : **0 156 145**
**B1**

(12) # EUROPÄISCHE PATENTSCHRIFT

(45) Veröffentlichungstag der Patentschrift : **09.11.88**

(51) Int. Cl.⁴ : **C 07 C147/12**

(21) Anmeldenummer : **85101536.2**

(22) Anmeldetag : **22.03.82**

(60) Veröffentlichungsnummer der früheren Anmeldung nach Art. 76 EPÜ : **0062607**

(54) **Diphenylsulfonverbindungen, deren Herstellung und Verwendung.**

(30) Priorität : **27.03.81 CH 2096/81**

(43) Veröffentlichungstag der Anmeldung : **02.10.85 Patentblatt 85/40**

(45) Bekanntmachung des Hinweises auf die Patenterteilung : **09.11.88 Patentblatt 88/45**

(84) Benannte Vertragsstaaten : **CH DE FR GB LI**

(56) Entgegenhaltungen :
**DE-C- 648 769**
**FR-A- 871 731**

(73) Patentinhaber : **CIBA-GEIGY AG**
**Klybeckstrasse 141**
**CH-4002 Basel (CH)**

(72) Erfinder : **Hurter, Rudolf**
**Laufenburgerstrasse 10/3**
**CH-4058 Basel (CH)**

**EP 0 156 145 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die der vorliegenden Erfindung zugrunde liegende Aufgabe war es, neue Verbindungen zu finden, die zur Herstellung von Farbstoffen geeignet sind.

Es wurde nun gefunden, dass die Verbindungen der Formel (1) den genannten Anforderungen genügen.

Gegenstand der vorliegenden Erfindung sind Verbindungen der Formel

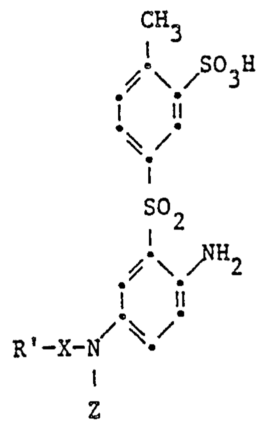

(1)

worin R′ ein gegebenenfalls substituierter $C_{1-12}$-Alkyl-, Cycloalkyl-, Aralkyl- oder Arylrest, X eine $—SO_2—$, $—SO_2NH—$ oder

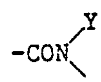

-Gruppe, wobei R′ an das Stickstoffatom gebunden ist, Y Wasserstoff oder $C_{1-4}$-Alkyl und Z Wasserstoff oder $C_{1-4}$-Alkyl ist, und deren Herstellung.

Falls R′ ein $C_{1-12}$-Alkylrest ist, handelt es sich um einen geradkettig oder verzweigten Alkylrest, der weitersubstituiert sein kann, z. B. durch Halogen, wie Fluor, Chlor oder Brom, Hydroxy, Sulfato, Sulfo, Carboxy, Cyano, $C_{1-4}$-Alkoxy, wie Methoxy, Aethoxy, Propoxy, Isopropoxy, Butoxy, sek.-Butoxy, tert.-Butoxy oder Isobutoxy, und Alkanoylgruppen mit 1 bis 6 Kohlenstoffatomen, wie die Acetyl- oder Propionylgruppe, und die Benzoylgruppe. Als Beispiele für R′ als $C_{1-12}$-Alkylrest seien genannt : Methyl, Aethyl, β-Chloräthyl, β-Hydroxyäthyl, β-Cyanäthyl, Propyl, Isopropyl, 2-Oxopropyl, n-Butyl, Isobutyl, sek.-Butyl, tert.-Butyl, Pentyl-(3), Heptyl-(3) und Dodecyl. Vorzugsweise ist R′ ein gegebenenfalls substituierter $C_{1-7}$-Alkylrest.

Bedeutet R′ einen Cycloalkylrest, so kommen beispielsweise Cycloalkylgruppen mit vorzugsweise 5- oder 6-gliedrigen Ringen, besonders die Cyclohexylgruppe, in Betracht.

Bedeutet R′ einen Aralkylrest, so handelt es sich vorzugsweise um $C_{1-4}$-Alkyl-phenyl- oder -naphthylreste, wie beispielsweise den Benzyl- oder Phenäthylrest.

Bedeutet R′ einen Arylrest, so gehört dieser vorzugsweise der Benzol- oder Naphthalinreihe an, er kann weitersubstituiert sein, beispielsweise durch $C_{1-4}$-Alkylgruppen, wie Methyl, $C_{1-4}$-Alkoxygruppen wie Methoxy und Aethoxy, Halogen, wie Fluor, Chlor oder Brom, Alkanoylaminogruppen mit 1 bis 6 Kohlenstoffatomen, wie Acetylamino, Hydroxy und Carboxy. Insbesondere ist R′ als Arylrest ein gegebenenfalls substituierter Phenylrest.

Bedeutet X eine

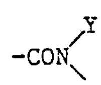

-Gruppe, so ist Y Wasserstoff oder $C_{1-4}$-Alkyl, wie Methyl, Aethyl, Propyl, Isopropyl, Butyl, Isobutyl, sek.-Butyl oder tert.-Butyl, vorzugsweise ist Y Wasserstoff, Methyl oder Aethyl.

Bedeutet Z einen $C_{1-4}$-Alkylrest, so kommt beispielsweise ein Methyl-, Aethyl-, Propyl-, Isopropyl- oder Butylrest in Betracht. Vorzugsweise ist Z Wasserstoff.

Die Verbindungen der Formel (1) werden hergestellt, indem man eine Verbindung der Formel

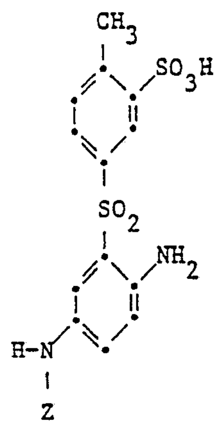

(2)

mit einer Verbindung, die die Gruppe R'-X einführt, in wässriger Lösung bei schwach sauren, neutralen bis schwach alkalischen pH-Werten, bei Temperaturen zwischen 0° und 100 °C oder gegebenenfalls in organischen Lösungsmitteln in Gegenwart von wasserabspaltenden Mitteln bei Temperaturen zwischen 100° und 150 °C zu einer Verbindung der Formel (1) umsetzt.

Als die Gruppe R'-X einführende Verbindungen kommen z. B. solche in Betracht, die ein an X der Gruppe R'-X gebundenes abspaltbares Halogenatom, wie ein Fluor-, Chlor- oder Bromatom oder eine Hydroxygruppe enthalten; oder die unter Addition und gegebenenfalls nachfolgender Umlagerung, beispielsweise der Addition mit einem Isocyanat, mit einer Verbindung der Formel (2) zu einer Verbindung der Formel (1) umgesetzt werden.

Als Wasserabspaltende Mittel kommen beispielsweise in Betracht: Carbodiimid, Triphenylsulfit.

Als Ausgangsverbindungen, die die Gruppe R'-X einführen, seien beispielsweise genannt:

Phenylisocyanat, 3-Chlorphenylisocyanat, Methylisocyanat, Aethylisocyanat, Isopropylisocyanat, tert.-Butylisocyanat, Cyclohexylisocyanat, 4-Methylphenylisocyanat, Chlorameisensäure-N-methyl-, -äthyl-, isopropyl-, -tert.-butyl- oder -cyclohexylamid, Chlorameisensäure-N,N-dimethyl- oder -diäthylamid, Methansulfochlorid, Aethansulfochlorid, Aethylaminosulfochlorid, Phenyl-, p-Tolyl- oder 4-Acetylaminophenylsulfochlorid.

Die bevorzugten Verfahren zur Herstellung der Verbindung der Formel (1) sind dadurch gekennzeichnet, dass man

a) eine Verbindung der Formel (2) mit einer Verbindung der Formel

$$R'—X—A \qquad (3)$$

umsetzt, wobei A Halogen, wie Fluor, Chlor oder Brom bedeutet und R' und X die unter Formel (1) angegebenen Bedeutungen haben; oder

b) zur Herstellung von Verbindungen der Formel

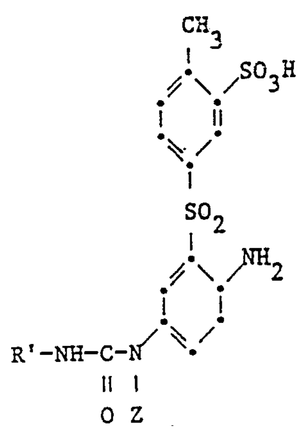

(4)

worin R' und Z die unter Formel (1) angegebenen Bedeutungen haben, eine Verbindung der Formel (2) mit einem Isocyanat der Formel

$$R'—N=C=O \qquad (5)$$

umsetzt.

Bevorzugt sind Verbindungen der Formel (1), worin R' $C_{1-7}$-Alkyl, das durch Hydroxy, Methoxy oder Acetyl substituiert sein kann, Cyclohexyl, Benzyl oder Phenyl, das durch Methyl, Hydroxy, Chlor, Carboxy oder Acetylamino substituiert sein kann, X eine $—SO_2—$ $—CONH—$,

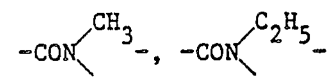

oder $—SO_2NH$-Gruppe, wobei R' an das Stickstoffatom gebunden ist, und Z Wasserstoff ist. Sie werden hergestellt, indem man die Verbindung der Formel (2), worin Z Wasserstoff ist, mit Verbindungen der Formeln (3) oder (5), umsetzt, wobei R' und X in den Formeln (3) und (5) die oben angegebenen bevorzugten Bedeutungen haben.

Als Beispiele für Verbindungen der Formel (1) seien genannt:

2-Amino-5-methylsulfamoyl-1,1'-diphenylsulfon-4'-methyl-3'-sulfonsäure,
2-Amino-5-methylaminocarbonylamino-1,1'-diphenylsulfon-4'-methyl-3'-sulfonsäure,
2-Amino-5-äthylaminocarbonylamino-1,1'-diphenylsulfon-4'-methyl-3'-sulfonsäure,
2-Amino-5-isopropylaminocarbonylamino-1,1'-diphenylsulfon-4'-methyl-3'-sulfonsäure,
2-Amino-5-tert.-butylaminocarbonylamino-1,1'-diphenylsulfon-4'-methyl-3'-sulfonsäure,
2-Amino-5-cyclohexylaminocarbonylamino-1,1'-diphenylsulfon-4'-methyl-3'-sulfonsäure,
2-Amino-5-N,N-dimethylaminocarbonylamino-1,1'-diphenylsulfon-4'-methyl-3'-sulfonsäure,
2-Amino-5-N,N-diäthylaminocarbonylamino-1,1'-diphenylsulfon-4'-methyl-3'-sulfonsäure,
2-Amino-5-äthylaminosulfonylamino-1,1'-diphenylsulfon-4'-methyl-3'-sulfonsäure,
2-Amino-5-(4'-acetylamino- oder 4'-methyl-phenylsulfamoyl)-1,1"-diphenylsulfon-4"-methyl-3"-sulfonsäure,
2-Amino-5-phenylsulfamoyl-1,1'-diphenylsulfon-4'-methyl-3'-sulfonsäure,
2-Amino-5-phenylaminocarbonylamino-1,1'-diphenylsulfon-4'-methyl-3'-sulfonsäure,
2-Amino-5(4'-methyl- oder 3'-chlorphenylaminocarbonylamino)-1,1"-diphenylsulfon-4"-methyl-3"-sulfonsäure.

Die Verbindungen der Formel (1) können als Diazokomponenten zur Herstellung von Azofarbstoffen verwendet werden.

Das Verfahren ist dadurch gekennzeichnet, dass man eine Verbindung der Formel (1) diazotiert und auf eine Kupplungskomponente der Formel

$$H—K \qquad (6)$$

kuppelt, wobei K in Formel (6) den Rest einer Kupplungskomponente bedeutet.

Die Diazotierung der Diazokomponenten der Formel (1) erfolgt in der Regel durch Einwirkung salpetriger Säure in wässrig-mineralsaurer Lösung bei tiefer Temperatur, die Kupplung auf die Kupplungskomponente der Formel (6) bei sauren, neutralen bis alkalischen pH-Werten.

Die erhaltenen Farbstoffe eignen sich zum Färben und Bedrucken von Amidgruppen enthaltenden Materialien, wie Textilfasern, Textilfäden und -geweben aus Wolle, Seide und Polyurethanfasern, insbesondere aber zum Färben und Bedrucken von synthetischem Polyamid, wobei die üblichen Färbeverfahren angewendet werden.

Sie zeichnen sich aus durch Brillanz und Farbstärke, gutes Auszieh- und Aufbauvermögen, Beständigkeit gegenüber Formaldehyd und allgemein gute Echtheiten, wie Lichtechtheit, Reibechtheit, Säure- und Alkaliechtheit, Nassechtheiten, insbesondere Wasch-, Wasser-, Heisswasser- und Schweissechtheit aus und geben egale Färbungen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1 : 34,2 g 2,5-Diamino-1,1'-diphenylsulfon-4'-methyl-3'-sulfonsäure werden in 150 ml Wasser bei Raumtemperatur unter Zusatz von 2N Natronlauge bei pH 7 gelöst. Man kühlt ab und lässt bei 3-5° innert 1 Stunde 15,4 g 3-Chlor-phenylisocyanat hinzutropfen. Anschliessend wird mit wenigen Tropfen 2N Natronlauge auf pH 8 gestellt, auf 85° erwärmt und die Lösung mit Aktivkohle klärfiltriert. Das auskristallisierte Produkt wird nach einiger Zeit bei Raumtemperatur filtriert und nach dem Waschen mit Sole bei 60-70° im Vacuum getrocknet. Man erhält 50,96 g des Zwischenproduktes der Formel

(Siehe Formel Seite 5 f.)

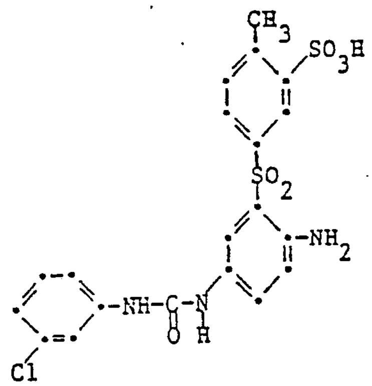

Beispiel 2 : 34,2 g 2,5-Diamino-1,1'-diphenylsulfon-4'-methyl-3'-sulfonsäure werden in 150 ml Wasser bei Raumtemperatur unter Zusatz von 2N Natronlauge bei pH 7 gelöst. Nach Zugabe von 11,76 g Natriumbicarbonat werden in ca. 2 Stunden 13,74 g Methansulfochlorid zugetropft. Die neutrale Masse wird mit Kochsalz ausgesalzen und filtriert. Man erhält nach dem Waschen mit Sole und Trocknen bei 60-75° im Vacuum 42,42 g des Zwischenproduktes der Formel

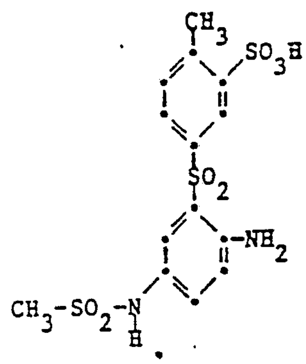

Wenn man wie in den Beispielen 1 und 2 angegeben verfährt, und Monoacylderivate und 2,5-Diamino-1,1'-diphenylsulfon-4'-methyl-3'-sulfonsäure einsetzt, so erhält man 2-Amino-5-acylamino-4'-methyl-1,1'-diphenylsulfon-3'-sulfonsäuren, worin der Acylrest die in der folgenden Tabelle in Kolonne II angegebene Bedeutung hat.

Tabelle

| I<br>Beispiel | II<br>Acylrest |
|---|---|
| 3 | $-CONHCH_3$ |
| 4 | $-CONHC_2H_5$ |
| 5 | $-CONHCH(CH_3)_2$ |
| 6 | $-CONHC(CH_3)_3$ |
| 7 | -CONH- 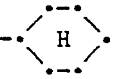 |
| 8 | -CONH- 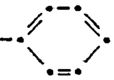 |

Tabelle (Fortsetzung)

| I Beispiel | II Acylrest |
|---|---|
| 9 | 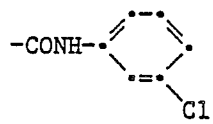 |
| 10 | 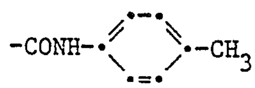 |
| 11 | $-CON(CH_3)_2$ |
| 12 | $-CON(C_2H_5)_2$ |
| 13 | $-SO_2NHC_2H_5$ |
| 14 | 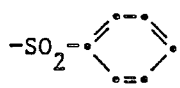 |
| 15 | 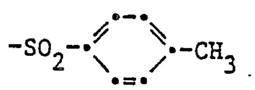 |
| 16 | 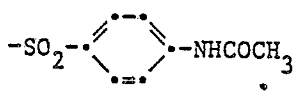 |

## Patentansprüche

1. Verbindungen der Formel

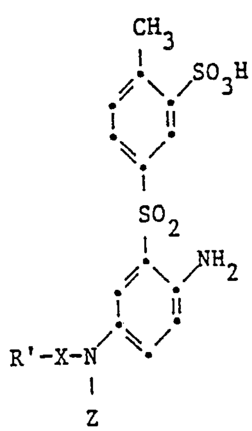

(1)

worin R' ein gegebenenfalls substituierter $C_{1-12}$-Alkyl-, Cycloalkyl-, Aralkyl- oder Arylrest, X eine $—SO_2—$, $—SO_2NH—$ oder

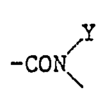

-Gruppe, wobei R′ an das Stickstoffatom gebunden ist, Y Wasserstoff oder $C_{1-4}$-Alkyl und Z Wasserstoff oder $C_{1-4}$-Alkyl ist.

2. Verbindungen gemäss Anspruch 1, worin R′ $C_{1-7}$-Alkyl, das durch Hydroxy, Methoxy oder Acetyl substituiert sein kann, Cyclohexyl, Benzyl oder Phenyl, das durch Methyl, Hydroxy, Chlor, Carboxy oder Acetylamino substituiert sein kann, X eine $—SO_2—$, —CONH—,

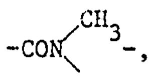, 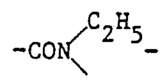

oder $—SO_2NH$-Gruppe, wobei R′ an das Stickstoffatom gebunden ist, und Z Wasserstoff ist.

3. Verfahren zur Herstellung von Verbindungen gemäss Anspruch 1, dadurch gekennzeichnet, dass man eine Verbindung der Formel

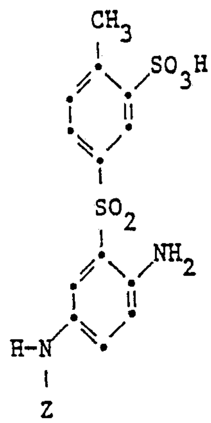

(2)

worin Z die in Anspruch 1 angegebene Bedeutung hat, mit einer Verbindung, die die Gruppe R′—X einführt, wobei R′ und X die in Anspruch 1 angegebenen Bedeutungen haben, in wässriger Lösung bei schwach sauren, neutralen bis schwach alkalischen pH-Werten, bei Temperaturen zwischen 0° und 100 °C oder gegebenenfalls in organischen Lösungsmitteln in Gegenwart wasserabspaltender Mittel bei Temperaturen zwischen 100° und 150 °C zu einer Verbindung der Formel (1) umsetzt.

4. Verfahren gemäss Anspruch 3, dadurch gekennzeichnet, dass man eine Verbindung der Formel (2) mit einer Verbindung der Formel

R′—X—A (3)

worin R′ und X die in Anspruch 3 angegebenen Bedeutungen haben, und A ein Halogenatom ist, umsetzt.

5. Verfahren gemäss Anspruch 3, zur Herstellung von Verbindungen der Formel

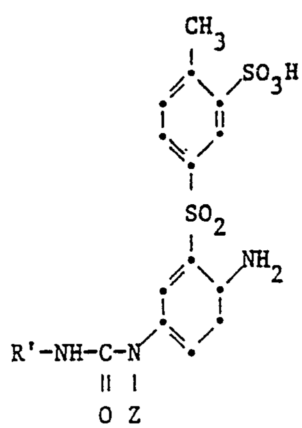

(4)

worin R′ und Z die in Anspruch 3 angegebenen Bedeutungen haben, dadurch gekennzeichnet, dass man eine Verbindung der Formel (2) mit einem Isocyanat der Formel

R′—N=C=O (5),

worin R′ die in Anspruch 3 angegebene Bedeutung hat, umsetzt.

6. Verwendung der Verbindungen gemäss den Ansprüchen 1 und 2 bzw. der gemäss den Ansprüchen 3 bis 5 erhaltenen Verbindungen zur Herstellung von Farbstoffen.

**Claims**

1. A compound of the formula

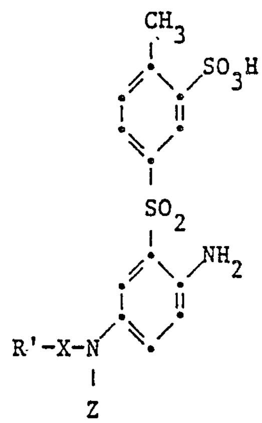

(1)

in which R′ is a substituted or unsubstituted $C_{1-12}$alkyl, cycloalkyl, aralkyl or aryl radical, X is an —$SO_2$—, —$SO_2NH$— or

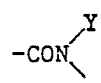

group, R′ being attached to the nitrogen atom, Y is hydrogen or $C_{1-4}$alkyl and Z is hydrogen or $C_{1-4}$alkyl.

2. A compound according to claim 1, in which R′ is $C_{1-7}$alkyl which can be substituted by hydroxyl, methoxy or acetyl, or is cyclohexyl, benzyl or phenyl which can be substituted by methyl, hydroxyl, chlorine, carboxyl or acetylamino, X is an —$SO_2$—, —CONH—,

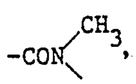 , 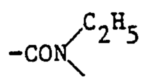

or —$SO_2NH$— group, R′ being attached to the nitrogen atom, and Z is hydrogen.

3. A process for the preparation of a compound according to claim 1, which comprises reacting a compound of the formula

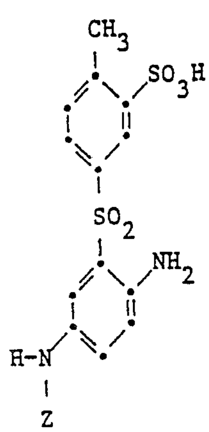

(2)

in which Z is as defined under formula (1), in an aqueous solution, at slightly acid or neutral to slightly alkaline pH values and at temperatures between 0° and 100 °C, or, if desired, in organic solvents in the presence of dehydrating agents at temperatures between 100° and 150 °C, with a compound which introduces the group R′—X, R′ and X being as defined under formula (1), to give a compound of the formula (1).

4. A process according to claim 3, wherein a compound of the formula (2) is reacted with a compound of the formula

$$R'—X—A \quad (3)$$

in which R' and X are as defined in claim 3 and A is a halogen atom.

5. A process according to claim 3 for the preparation of a compound of the formula

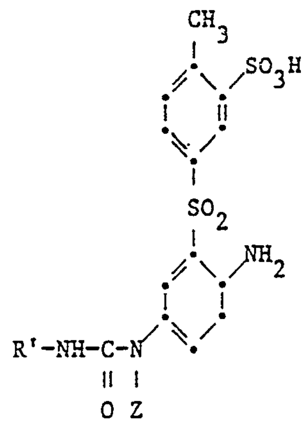

(4)

in which R' and Z are as defined in claim 3, wherein a compound of the formula (2) is reacted with an isocyanate of the formula

$$R'—N=C=O \quad (5)$$

R' being as defined in claim 3.

6. The use of a compound according to claims 1 and 2 or of a compound obtained according to claims 3 to 5 for the preparation of dyes.

**Revendications**

1. Composés de formule

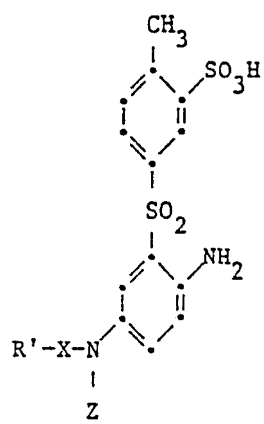

(1)

dans laquelle R' est un reste alkyle en $C_1$-$C_{12}$, cycloalkyle, aralkyle ou aryle éventuellement substitué ; X est un groupe $—SO_2—$, $—SO_2NH—$ ou

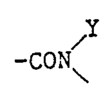

R' étant lié à l'atome d'azote ; Y est un atome d'hydrogène ou un groupe alkyle en $C_{1-4}$ ; et Z est un atome d'hydrogène ou un groupe alkyle en $C_{1-4}$.

2. Composés selon la revendication 1, dans lesquels R' est un radical alkyle en $C_{1-7}$ qui peut être

substitué par un groupe hydroxy, méthoxy ou acétyle ; un radical cyclohexyle, benzyle ou phényle qui peut être substitué par un atome de chlore ou par un groupe méthyle, hydroxyle, carboxyle ou acétylamino ; X est un groupe $—SO_2—$, —CONH—,

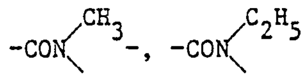

ou $—SO_2NH—$, R′ étant lié à l'atome d'azote ; et Z est un atome d'hydrogène.

3. Procédé pour la préparation de composés selon la revendication 1, caractérisé par le fait qu'on fait réagir un composé de formule

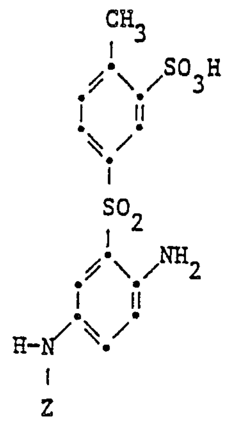

(2)

dans laquelle Z a la signification donnée dans la revendication 1, avec un composé qui introduit le groupe R′—X, R′ et X ayant les significations données dans la revendication 1, en solution aqueuse à des pH faiblement acides, neutre à faiblement alcalins, à des températures comprises entre 0 et 100 °C, ou éventuellement dans des solvants organiques en présence de déshydratants, à des températures comprises entre 100 et 150 °C, pour aboutir à un composé de formule (1).

4. Procédé selon la revendication 3, caractérisé par le fait qu'on fait réagir un composé de formule (2) avec un composé de formule

$$R'—X—A \qquad (3),$$

dans laquelle R′ et X ont les significations données dans la revendication 3, et A est un atome d'halogène.

5. Procédé selon la revendication 3, pour la préparation de composés de formule

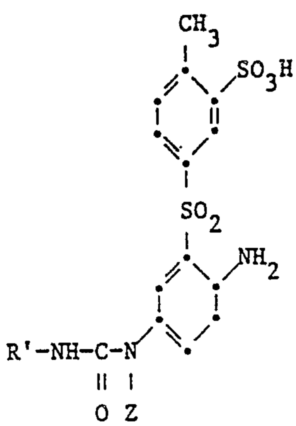

(4)

dans laquelle R′ et X ont les significations données dans la revendication 3, caractérisé par le fait qu'on fait réagir un composé de formule (2) avec un isocyanate de formule

$$R'—N{=}C{=}O \qquad (5),$$

dans laquelle R′ a la signification donnée dans la revendication 3.

6. Utilisation des composés selon les revendications 1 et 2, ou respectivement des composés obtenus selon les revendications 3 à 5, pour la préparation de colorants.